# EUROPEAN PATENT SPECIFICATION

(11) **EP 2 706 534 B1**
(45) Date of publication and mention of the grant of the patent: **21.06.2017**
(21) Application number: 13183581.1
(22) Date of filing: 09.09.2013
(51) Int. Cl.: G21C 17/022, G21C 17/035, G21C 17/112, G21C 19/07, G01F 23/00

(54) **Method and system for measuring a spent fuel pool temperature and liquid level without external electrical power**
Verfahren und System zur Messung von Temperatur und Flüssigkeitspegel in einem Abklingbecken ohne externe elektrische Energie
Procédé et système pour mesurer la température et le niveau de liquide dans une piscine de refroidissement sans alimentation électrique externe

(30) Priority: 11.09.2012 US 201213609466
(43) Date of publication of application: 12.03.2014
(73) Proprietor: GE-Hitachi Nuclear Energy Americas LLC, Wilmington, NC 28401 (US)
(72) Inventor: Bass, John Robert, Wilmington, NC 28401 (US); Ginsberg, Robert Joseph, Wilmington, NC 28401 (US)
(74) Representative: Williams, Andrew Richard

(56) References cited:
- US-A- 4 590 797
- US-A- 5 211 904

## Description

### BACKGROUND

### Field of the Invention

Example embodiments relate generally to nuclear reactors, and more particularly to a method and system for measuring a spent fuel pool (SFP) temperature and liquid level that may be accomplished without the use of external electrical power. The system may be particularly beneficial in the event of a plant emergency that causes plant electrical power to be disrupted, or normal cooling of the spent fuel pools to otherwise become impaired.

### Related Art

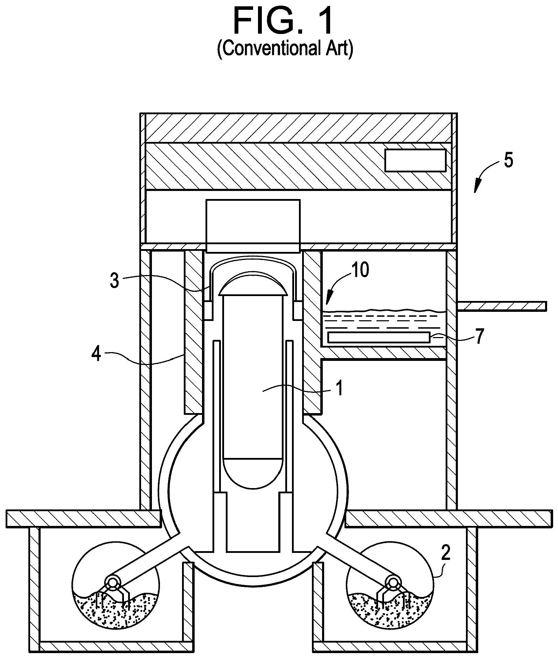

FIG. 1 is a cut-away view of a conventional boiling water nuclear reactor (BWR) reactor building 5, which is one example of a light water reactor (LWR). It should be understood that this is merely an example, as example embodiments may be equally applied to other reactor design layouts, such as pressurized water reactors (PWR) or other LWRs. In the BWR, the spent fuel pool (SFP) 10 is a storage pool used to store spent fuel 7 that remains following the use of the fuel to power the BWR reactor 1. The SFP 10 is generally positioned in a location adjacent to, and toward the top of, the reactor 1 (as shown in FIG. 1, the SFP 10 is located in secondary containment, outside of the steel containment vessel 3 and concrete shell 4 protecting reactor 1). It should be noted that in other reactor designs, the spent fuel pool may be located at a same plant elevation as the reactor 1, or at an elevation that is below the reactor 1. The spent fuel 7 is generally stored in the spent fuel pools 10 for a period of at least 5 years before being sent to reprocessing or cask storage. The SFP 10 is typically 12.2 m (40 feet) or greater in depth, with a floor that is equipped to support the spent fuel 7. About 2.44 m (8 feet) of water (above the top of the spent fuel 7, itself) is generally needed to keep radiation levels in the SFP 10 within acceptable limits.

A flow of cooling water, provided by conventional fuel pool cooling and cleanup system (not shown), provides shielding from radiation and maintains the SFP 10 at cool temperatures that ensure the cooling water does not boil (thereby exposing the spent fuel to open air). Specifically, the conventional fuel pool cooling pumps transfer the water from the spent fuel pool to the fuel pool cooling and cleanup system. The conventional fuel pool cooling and cleanup system cools and cleans the water, using a heat exchanger and demineralizers (removing some radioisotopes, and other impurities). The spent fuel pool cooling pumps then send the cool, clean water back to the SFP 10.

During a serious plant accident, normal plant electrical power may be disrupted. In particular, the plant may be without normal electrical power to run the conventional spent fuel pool cooling pumps, operate the spent fuel pool cooling and cleanup system, and power fuel pool instrumentation. If electrical power is disrupted for a lengthy period of time, disruption in the use of the fuel pool cooling and cleanup system may cause water in the spent fuel pool to warm and eventually boil. When enough boiling occurs, water levels in the pool may drop to levels that no longer provide enough cooling water to effectively shield radiation that may be caused by the spent fuel. In very serious emergencies, water in the SFP 10 may boil and evaporate to the point that the spent fuel 7 may become exposed to open air. Furthermore, other events such as earthquakes, fires or explosions, may cause water to be lost from the spent fuel pool even in the absence of boiling. Such an emergency may pose grave dangers for plant personnel and the environment.

Conventionally, the level of the SFP 10 is monitored indirectly via level measurement instruments (requiring external electrical power) at a skimmer surge tank (attached to the SFP 10). Also, the temperature of the SFP 10 is indirectly measured at the spent fuel pool cooling system via temperature instruments (also requiring external electrical power). Therefore, during a serious plant accident when plant power may be disrupted, the conventional temperature and level measurement instruments may not be used. This may cause plant operators to be unaware of the true temperature and/or liquid level of the water in the SFP 10. By not knowing this information, preventative measures to cool and/or restore a volume of water to the SFP 10 may not be taken to prevent a serious accident from occurring.

US 5,211,904 relates to an in-vessel water level monitor for mounting within a reactor vessel of a boiling water reactor to provide a read-out of the collapsed water level within the reactor vessel.

### SUMMARY OF INVENTION

The invention provides a system and method in accordance with the appended claims.

### BRIEF DESCRIPTION OF THE DRAWINGS

The above and other features and advantages of example embodiments will become more apparent by describing in detail, example embodiments with reference to the attached drawings. The accompanying drawings are intended to depict example embodiments and should not be interpreted to limit the intended scope of the claims. The accompanying drawings are not to be considered as drawn to scale unless explicitly noted.
FIG. 1 is a cut-away view of one example design of a conventional light water nuclear reactor (LWR) reactor building;
FIG. 2 is a schematic of a temperature and level measurement system, in accordance with an example embodiment; and
FIG. 3 is a flowchart of a method of using the temperature and level measurement system, in accordance with an example embodiment.

### DETAILED DESCRIPTION

Detailed example embodiments are disclosed herein. However, specific structural and functional details disclosed herein are merely representative for purposes of describing example embodiments. Example embodiments may, however, be embodied in many alternate forms and should not be construed as limited to only the embodiments set forth herein.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

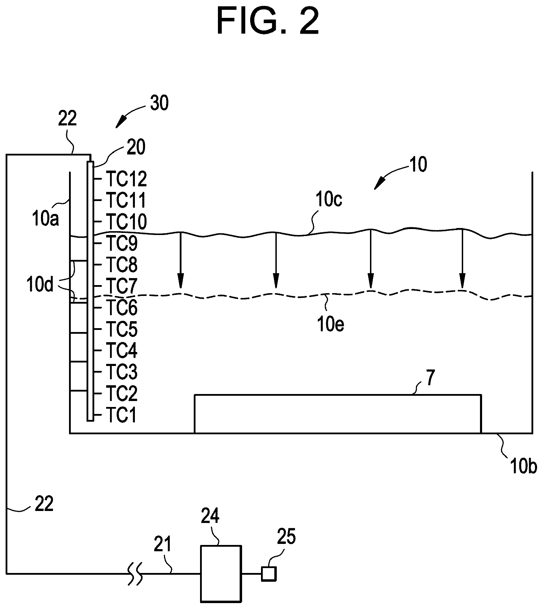

FIG. 2 is a schematic of a temperature and level measurement system 30, in accordance with an example embodiment. The system 30 includes a cable 20 with thermocouples (TC1-TCn) attached to a bottom end of the cable 20. The end of the cable 20 with the thermocouples may be mounted vertically along a sidewall 10a of the SFP 10 via brackets 10d. The cable 20 may extend down the side of the SFP 10 and to a depth that is near the floor 10b of the SFP 10. The cable 20 and thermocouples (TC1-TCn) may be located a distance apart from spent fuel 7 within SFP 10, so as not to interfere with the maintenance and/or movement of the spent fuel 7.

The thermocouples (TC1-TCn) take temperature measurements within the SFP 10. In doing so, the liquid level 10c of the SFP 10 is inferred by comparing the temperature readings of the thermocouples to each other. Specifically, thermocouples exposed to ambient air (such as TC10-TC12) will provide a noticeable different temperature reading than the thermocouples (TC1-TC9) below the water level 10c. For instance, when the water in SFP 10 and the ambient air above SFP 10 is about room temperature, the thermocouples (TC1-TC9) below the water level 10c will normally provide a temperature reading that is noticeably below the temperature reading of the thermocouples (TC10-TC12) above the water level 10c. Therefore, the water level 10c may be inferred as being located between thermocouple TC9 and TC10. By knowing the height (relative to the floor 10b of SFP 10) of thermocouples TC9 and TC10, the liquid water level 10c can therefore be determined. Furthermore, when a plant accident occurs and water in the SFP 10 heats up significantly (to temperatures that may reach boiling, at about 100°C (212 °F)), the level of liquid in the SFP 10 may drop (due to boiling / evaporation of the heated water) to a lower level 10e. Because the water would be hot during an accident, thermocouples below the water level 10e (specifically, thermocouples TC1-TC6) will provide a temperature reading that is higher than thermocouples exposed to air (specifically, thermocouples TC10-TC12, as well as thermocouples TC7-TC9 that were exposed to air due to water level boiling / evaporation). Therefore, the water level 10e may be inferred as being located between thermocouple TC6 and TC7. By knowing the height (relative to the floor 10b of SFP 10) of thermocouples TC6 and TC7, the liquid water level 10e can therefore be determined.

The thermocouples TC may be spaced apart about equidistantly from each other along the cable 20. Increasing the number of thermocouples (and, thereby, reducing the spacing between the thermocouples) may increase the accuracy of water level measurements of system 30. Furthermore, prior to taking water level measurements, an accurate measure of the distance between the floor 10b of the SFP 10 and each thermocouple TC must be obtained for the system 30 to provide accurate liquid level measurements.

Because ambient heat (from the water in the SFP 10, and air above the SFP 10) may power the thermocouples (TC1-TCn), no external power source is required to operate system 30. Wiring 22 may be attached to the top of the cable 20. A terminal portion 21 of the wiring may extend to a remote location positioned a distance away from the SFP 10. The remote location may include a simple multi-meter 24 or multiple voltage indicators 24 attached to the thermocouples TC via the wiring 21. This may provide plant personnel with temperature and level measurement information at a location that is a safe distance from the potentially hazardous environment of the SFP 10 during a plant accident.

A processor 25 may optionally be included in the system 30. The processor 25 may be in communication with the simple multi-meter 24 or multiple voltage indicators 24. The processor 25 may be used to compare temperatures output from the thermocouples TC in order to infer a liquid level in the SFP 10. Alternative to using a processor 25, the comparison of the temperatures output from the thermocouples TC may be done manually (by a person) in order to infer a liquid level in the SFP 10.

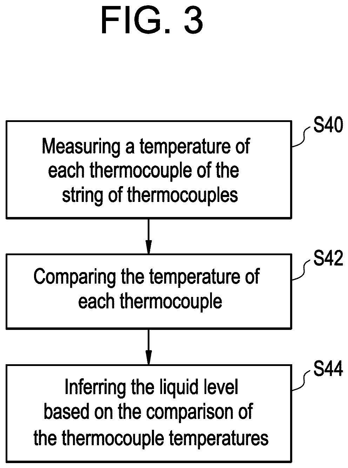

FIG. 3 is a flowchart of a method of using the temperature and level measurement system 30, in accordance with an example embodiment. Step S40 includes measuring a temperature of each thermocouple (TC1-TC12). Step S42 includes comparing the temperatures of the thermocouples to each other. This comparison may include determining a noticeable temperature difference between two groups of the thermocouples (TC1-TC12). For example, when the liquid in SFP 10 is at 10c (as shown in FIG. 2), thermocouples TC1-TC9 may share a common temperature reading and thermocouples TC10-TC12 may share a common temperature reading (though the temperatures of TC1-TC9 and TC10-TC12 may be noticeably different from each other). Step S44 includes inferring the liquid level 10c of the SFP 10 based on the comparison of thermocouple temperature readings. For instance, knowing that thermocouple groups TC1-TC9 and TC10-TC12 share a noticeable temperature difference, it can be inferred that consecutive thermocouples TC9 and TC10 bracket the water level 10c. If TC9 and TC10 are a known distance from the floor 10b of the SFP 10, the height of the water level 10c (somewhere between TC9 / TC10) may then be determined. Step S44 may be accomplished manually (by a person), or accomplished by processor 25.

Example embodiments having thus been described, it will be obvious that the same may be varied in many ways. Such variations are not to be regarded as a departure from the intended scope of example embodiments, and all such modifications as would be obvious to one skilled in the art are intended to be included within the scope of the following claims.

## Claims

1. A system (30) suitable for measuring temperature and liquid level of a spent fuel pool (10), the system comprising:
a cable (20), suitable for being mounted vertically along a sidewall (10a) of the spent fuel pool (10);
a plurality of thermocouples (TC1-TCn) attached to the cable, the thermocouples being vertically spaced apart from each other and configured to take temperature measurements; and
means (24, 25) arranged for comparing the temperature measurements and inferring a liquid level in the spent fuel pool (10) based on the comparison of the temperatures; **characterized in that** the system is arranged to be powered by ambient heat from water in the spent fuel pool (10) and air above the spent fuel pool (10).

2. The system (30) of claim 1, wherein the bottom end of the cable (20) is suitable for extending down to a position near a bottom floor (10b) of the spent fuel pool (10).

3. The system (30) of any preceding claim, further comprising:
wiring (22) attached to the plurality of thermocouples (TC1-TCn);
one of a multi-meter and a multiple voltage indicator (24) suitable for being located at a remote location relative to the spent fuel pool (10), the plurality of thermocouples being electrically connected to the multi-meter or the multiple voltage indicator via the wiring.

4. The system (30) of any preceding claim, wherein,
the spacing between the thermocouples (TC1-TCn) is about equidistant, such that each thermocouple can be at a known distance from a bottom floor (10b) of the spent fuel pool (10).

5. A method of making a system (30) arranged for measuring temperature and liquid level of a spent fuel pool (10), the method comprising:
mounting a cable (20) vertically along a sidewall (10a) of a spent fuel pool (10);
attaching a plurality of thermocouples (TC1-TCn) to the cable, the thermocouples being vertically spaced apart from each other;
measuring temperatures using the plurality of thermocouples (TC1-TCn);
comparing the temperatures output from the thermocouples (TC1-TCn); and
inferring a liquid level in the spent fuel pool (10) based on the comparison of the temperatures; and **characterized in that**
the system (30) is arranged to be powered by ambient heat from water in the spent fuel pool (10) and air above the spent fuel pool (10).

6. The method of claim 5, further comprising:
extending a bottom end of the cable (20) down to a position near a bottom floor (10b) of the spent fuel pool (10).

7. The method of either of claim 5 or 6, further comprising:
electrically connecting the plurality of thermocouples (TC1-TCn) to one of a multi-meter and a multiple voltage indicator (24) located at a remote location relative to the spent fuel pool (10).

8. The method of any of claims 5 to 7, wherein,
the spacing between the thermocouples (TC1-TCn) is about equidistant,
each thermocouple is a known distance from a bottom floor (10b) of the spent fuel pool (10).

9. The method of any of claims 5 to 8, wherein the comparing of the temperatures of the thermocouples (TC1-TCn) includes determining a noticeable temperature difference between a first group and a second group of the plurality of thermocouples.

10. The method of claim 9, wherein the inferring of the liquid level in the spent fuel pool (10) includes determining two consecutive thermocouples, of the plurality of thermocouples, that display the noticeable temperature difference and bracket the liquid level, the two consecutive thermocouples being a known distance from a bottom floor (10b) of the spent fuel pool.

11. The method of any of claims 5 to 10, wherein the comparing of the temperatures is accomplished by a processor (25).

## Patentansprüche

1. System (30), das zum Messen einer Temperatur und eines Flüssigkeitsstands eines Brennelementbeckens (10) geeignet ist, das System umfassend:
ein Kabel (20), das geeignet ist, vertikal entlang einer Seitenwand (10a) des Brennelementbeckens (10) montiert zu werden;
mehrere Thermoelemente (TC1-TCn), die am Kabel befestigt sind, wobei die Thermoelemente vertikal voneinander beabstandet sind und konfiguriert sind, Temperaturmessungen vorzunehmen; und
Mittel (24, 25), die zum Vergleichen der Temperaturmessungen und Ableiten eines Flüssigkeitsstands im Brennelementbecken (10), basierend auf dem Vergleich der Temperaturen, aufgebracht sind; **dadurch gekennzeichnet, dass** das System angeordnet ist, durch Umgebungswärme von Wasser im Brennelementbecken (10) und Luft über dem Brennelementbecken (10) mit Energie versorgt zu werden.

2. System (30) nach Anspruch 1, wobei das untere Ende des Kabels (20) geeignet ist, sich nach unten zu einer Position nahe einem Boden (10b) des Brennelementbeckens (10) zu erstrecken.

3. System (30) nach einem der vorangehenden Ansprüche, des Weiteren umfassend:
eine Verdrahtung (22), die an den mehreren Thermoelementen (TC1-TCn) befestigt ist;
eines von einem Multimeter und einem Mehrfachspannungsanzeigegerät (24), das geeignet ist, an einer entfernten Stelle, relativ zum Brennelementbecken (10), gelegen zu sein, wobei die mehreren Thermoelemente elektrisch mit dem Multimeter oder dem Mehrfachspannungsanzeigegerät mittels der Verdrahtung verbunden sind.

4. System (30) nach einem der vorangehenden Ansprüche, wobei der Abstand zwischen den Thermoelementen (TC1-TCn) ungefähr abstandsgleich ist, sodass jedes Thermoelement bei einer bekannten Distanz zu einem Boden (10b) des Brennelementbeckens (10) sein kann.

5. Verfahren zum Herstellen eines Systems (30), das angeordnet ist, eine Temperatur und einen Flüssigkeitsstand eines Brennelementbeckens (10) zu messen, das Verfahren umfassend:
Montieren eines Kabels (20) vertikal entlang einer Seitenwand (10a) eines Brennelementbeckens (10);
Befestigen mehrerer Thermoelemente (TC1-TCn) an dem Kabel, wobei die Thermoelemente vertikal voneinander beabstandet sind;
Messen von Temperaturen unter Verwendung der mehreren Thermoelemente (TC1-TCn);
Vergleichen der Temperaturen, die von den Thermoelementen (TC1-TCn) ausgegeben werden; und
Ableiten eines Flüssigkeitsstands im Brennelementbecken (10), basierend auf dem Vergleich der Temperaturen;
und **dadurch gekennzeichnet, dass**
das System (30) angeordnet ist, durch Umgebungswärme von Wasser im Brennelementbecken (10) und Luft über dem Brennelementbecken (10) mit Energie versorgt zu werden.

6. Verfahren nach Anspruch 5, des Weiteren umfassend:
Führen eines unteren Endes des Kabels (20) nach unten zu einer Position nahe einem Boden (10b) des Brennelementbeckens (10).

7. Verfahren nach Anspruch 5 oder 6, des Weiteren umfassend:
elektrisches Verbinden der mehreren Thermoelemente (TC1-TCn) mit einem von einem Multimeter und einem Mehrfachspannungsanzeigegerät (24), gelegen an einer entfernten Stelle relativ zum Brennelementbecken (10).

8. Verfahren nach einem der Ansprüche 5 bis 7, wobei,
der Abstand zwischen den Thermoelementen (TC1-TCn) ungefähr abstandsgleich ist,
jedes Thermoelement bei einer bekannten Distanz zu einem Boden (10b) des Brennelementbeckens (10) ist.

9. Verfahren nach einem der Ansprüche 5 bis 8, wobei der Vergleich der Temperaturen der Thermoelemente (TC1-TCn) ein Ermitteln einer nennenswerten Temperaturdifferenz zwischen einer ersten Gruppe und einer zweiten Gruppe der mehreren Thermoelemente enthält.

10. Verfahren nach Anspruch 9, wobei das Ableiten des Flüssigkeitsstands im Brennelementbecken (10) ein Ermitteln von zwei aufeinanderfolgenden Thermoelementen der mehreren Thermoelemente enthält, die die nennenswerte Temperaturdifferenz aufweisen und den Flüssigkeitsstand einklammern, wobei die zwei aufeinanderfolgenden Thermoelemente bei einer bekannten Distanz zu einem Boden (10b) des Brennelementbeckens sind.

11. Verfahren nach einem der Ansprüche 5 bis 10, wobei das Vergleichen der Temperaturen durch einen Prozessor (25) erfolgt.

## Revendications

1. Système (30) convenant à la mesure de la température et du niveau de liquide d'une piscine de combustible épuisé (10), le système comprenant :
un câble (20) convenant pour être monté verticalement le long d'une paroi latérale (10a) de la piscine de combustible épuisé (10) ;
une pluralité de thermocouples (TC1-TCn) fixés au câble, les thermocouples étant verticalement espacés l'un de l'autre et configurés pour prendre des mesures de la température ; et
des moyens (24, 25) agencés pour comparer les mesures de température et en déduire un niveau de liquide dans la piscine de combustible épuisé (10) sur la base de la comparaison des températures ; **caractérisé en ce que** :
le système est agencé pour être activé par la chaleur ambiante de l'eau dans la piscine de combustible épuisé (10) et de l'air au-dessus de la piscine de combustible épuisé (10).

2. Système (30) selon la revendication 1, dans lequel l'extrémité inférieure du câble (20) convient pour s'étendre vers le bas jusque dans une position proche du fond (10b) de la piscine de combustible épuisé (10).

3. Système (30) selon l'une quelconque des revendications précédentes, comprenant en outre :
un câblage (22) fixé à la pluralité de thermocouples (TC1-TCn) ;
l'un d'un multimètre et d'un indicateur de tension multiple (24) convenant pour être situés à un emplacement éloigné par rapport à la piscine de combustible épuisé (10), la pluralité de thermocouples étant connectée au multimètre ou à l'indicateur de tension multiple via le câblage.

4. Système (30) selon l'une quelconque des revendications précédentes, dans lequel :
l'espacement entre les thermocouples (TC1-TCn) est à peu près équidistant de sorte que chaque thermocouple puisse se trouver à une distance connue du fond (10b) de la piscine de combustible épuisé (10).

5. Procédé de fabrication d'un système (30) agencé pour mesurer la température et le niveau de liquide d'une piscine de combustible épuisé (10), le procédé comprenant :
le montage d'un câble (20) verticalement le long d'une paroi latérale (10a) d'une piscine de combustible épuisé (10) ;
la fixation d'une pluralité de thermocouples (TC1-TCn) au câble, les thermocouples étant espacés verticalement l'un de l'autre ;
la mesure de températures en utilisant la pluralité de thermocouples (TC1-TCn) ;
la comparaison des températures délivrées par les thermocouples (TC1-TCn) ; et
la déduction d'un niveau de liquide dans la piscine de combustible épuisé (10) sur la base de la comparaison des températures ;
et **caractérisé en ce que**
le système (30) est agencé pour être activé par la chaleur ambiante de l'eau dans la piscine de combustible épuisé (10) et de l'air au-dessus de la piscine de combustible épuisé (10).

6. Procédé selon la revendication 5, comprenant en outre :
l'extension d'une extrémité inférieure du câble (20) vers le bas dans une position proche du fond (10b) de la piscine de combustible épuisé (10).

7. Procédé selon l'une ou l'autre des revendications 5 ou 6, comprenant en outre :
la connexion électrique de la pluralité de thermocouples (TC1-TCn) à l'un d'un multimètre et d'un indicateur de tension multiple (24) situés à un emplacement éloigné par rapport à la piscine de combustible épuisé (10).

8. Procédé selon l'une quelconque des revendications 5 à 7, dans lequel :
l'espacement entre les thermocouples (TC1-TCn) est à peu près équidistant,
chaque thermocouple est à une distance connue du fond (10b) de la piscine de combustible épuisé (10).

9. Procédé selon l'une quelconque des revendications 5 à 8, dans lequel la comparaison des températures des thermocouples (TC1-TCn) comprend la détermination d'une température perceptible entre un premier groupe et un second groupe de la pluralité de thermocouples.

10. Procédé selon la revendication 9, dans lequel la déduction du niveau de liquide dans la piscine de combustible épuisé (10) comprend la détermination de deux thermocouples consécutifs de la pluralité de thermocouples qui affichent la différence de température perceptible et mettent entre parenthèses le niveau de liquide, les deux thermocouples consécutifs étant à une distance connue du fond (10b) de la piscine de combustible épuisé.

11. Procédé selon l'une quelconque des revendications 5 à 10, dans lequel la comparaison des températures est réalisée par un processeur (25).
